# EUROPEAN PATENT SPECIFICATION

(11) **EP 1 396 961 B1**
(45) Date of publication and mention of the grant of the patent: **07.12.2005**
(21) Application number: 03396080.8
(22) Date of filing: 05.09.2003
(51) Int. Cl.: H04L 12/24, H04L 29/06

(54) **Method, system and apparatus for providing authentication of data communication**
Verfahren, System und Vorrichtung für die Bereitstellung zur Authentifizierung der Datenkommunikation
Procédé, système et appareil pour authentifier la communication de données

(30) Priority: 06.09.2002 FI 20021594
(43) Date of publication of application: 10.03.2004
(73) Proprietor: Tellabs Oy, 02630 Espoo (FI)
(72) Inventor: Javanainen, Rauno, 02340 Espoo (FI)
(74) Representative: Kupiainen, Juhani Kalervo

(56) References cited:
- WO-A-01/24444
- GRIMM R ET AL: "Security policies in OSI-management experiences from the DeTeBerkom project BMSec" COMPUTER NETWORKS AND ISDN SYSTEMS, NORTH HOLLAND PUBLISHING. AMSTERDAM, NL, vol. 28, no. 4, 1 February 1996 (1996-02-01), pages 499-511, XP004002982 ISSN: 0169-7552
- GALVIN J M ET AL: "SECURE MANAGEMENT OF SNMP NETWORKS" INTEGRATED NETWORK MANAGEMENT, AMSTERDAM, NL, 1 April 1991 (1991-04-01), pages 703-714, XP002045685

## Description

### TECHNICAL FIELD OF THE INVENTION

The present invention relates generally to communicating data over a communication link.

### BACKGROUND OF THE INVENTION

The Simple Network Management Protocol (SNMP) is a standard applications-level protocol by which management information for a network element may be inspected or altered by logically remote users. SNMP is widely used for managing the Internet and other networks using the Transmission Control Protocol (TCP/IP) or the User Datagram Protocol (UDP) for client-server communication. SNMP, however, is not limited to any particular client-server communication protocol, since SNMP governs the content and protocol of messages for accessing the management information and not the particular manner in which the messages are transmitted. SNMP is defined in an Internet standards document, RFC 1157, by J. Case, M. Fedor, M. Schoffstall, and J. Davin entitled "A Simple Network Management Protocol (SNMP)", May 1990.

SNMP messages are transmitted between a client (referred to as a "manager" in the RFC 1157) and a server (referred to as an "agent" in the RFC 1157) in a network. Each SNMP message is an ASN.1 standard data structure that includes an SNMP version number of type INTEGER, a community name of type OCTET STRING (a string of 8-bit bytes), and data of type ANY.

The SNMP specification defines a protocol data unit (PDU) for use in the data portion of five different classes of SNMP messages. The PDU is an ANS.1 data structure including a Request ID of INTEGER type, an Error Status of INTEGER type, an Error Index of INTEGER type, a VarBind of SEQUENCE type, and a VarBindList which is a SEQUENCE OF VarBind. The Request ID identifies whether the PDU is for a Get request for obtaining values of instances of managed objects, a Get next request for obtaining the next value in a list of values, a Get response message for responding to a request message, a Set request for changing the values of instances of the managed objects, and a Trap message. The managed objects for a particular network element are defined in a data structure called a Management Information Base (MIB). The MIB includes Object Identifiers (OID) of the managed objects in the network element, and the OIDs are expressed as path names.

SNMP provides a very low level of security. There is not a secure enough method to configure devices using SNMP based communication. There is a threat of eavesdropping or snooping. It is too easy to monitor the traffic between the agent and the client and spoof to be an agent or a client. There is a threat that an unauthorized entity may alter in-transit SNMP messages. Moreover, the "community string" is accessible to anyone who may tap into the network, so that an unauthorized entity may assume the identity of an authorized entity.

One approach has been such that the agent has an authentication service that uses the community name as a kind of password. If the authentication service determines that the community name is not appropriate for access to the agent, then the agent will reject the message. This is discussed in the RFC 1157, for example, in the chapter 4.1.6.5. However, because of simplicity of the mere password approach, it is fairly easy to monitor the traffic between the entities, crack the simple password and pretend to be the either party.

Another approach has been discussed in a patent publication US 6,044,468. An encryption service in the client encrypts network management information with a secret key that can be recognized by the agent to which the message is directed. The encryption service invokes an SNMP message transmission service in the client to form a secure SNMP message having an apparent Object ID (OID) that identifies a decryption service in the agent and having an apparent Value that includes the encryption result. The SNMP message transmission service invokes a communication protocol service in the client to send the secure SNMP message to the agent. A communication protocol service in the agent receives the secure SNMP message, and passes the received message to an SNMP message reception service in the agent. The SNMP message reception service checks whether or not a Community Name visible in the secure SNMP message is appropriate for access to the agent, and if so, searches a Management Information Base (MIB) in the agent for a sub-agent corresponding to the apparent OID, and if such a sub-agent is found, dispatches the apparent Value of the apparent OID to the sub-agent. The sub-agent decrypts the encryption result in the apparent Value, and rejects the message if the sub-agent is unable to recognize a secret key authorized for access to the agent. However, such an approach still requires an increase in the complexity of the system by the encryption of the transferred message and the need for sub-agent based additional verification. This is a disadvantage especially in SNMP because the system is designed to be a simple and quite universal communication protocol for various systems.

Yet another approach has been discussed in a publication WO 01/24444 A2. There is being disclosed an authentication procedure, the SNMP, an agent and a client, and a seed. The publication discloses a method and a system for initializing an SNMP agent in SNMPv3 mode. The manager and agent both generate an associated random number and public value. The number is completely randomly obtained. The public values are exchanged between the manager and the agent. After the public values have been synchronized, the actual encryption process can be started.

In view of various inherent limitations of SNMP based communication and systems, it would be desirable to avoid or mitigate these and other problems associated with prior art. Thus, there is a need to have a mechanism for authentication that the message has originated from a particular entity. However, it is also desired for the mechanism to be as compatible as possible with the SNMP data structures and protocols.

### SUMMARY OF THE INVENTION

Now a method and a system have been invented for an authentication of an entity in an ordinarily insecure network communication protocol such as the Simple Network Management Protocol (SNMP).

In accordance with a first aspect of the invention there is provided a system for providing authentication of data communication over a communication link between a client and an agent in accordance with an ordinarily insecure network communication protocol, the protocol comprising a community string field for an appliance in the data communication, wherein, a string to be applied once, based on a shared seed between the client and the agent, is adapted to be incorporated into the community string field to be transmitted between the client and the agent for authentication, wherein the string is determined by an algorithm providing the same value at both the client and the agent based on the shared seed.

In accordance with a second aspect of the invention there is provided an apparatus for providing authentication of data communication over a communication link between a client and an agent in accordance with an ordinarily insecure network communication protocol, the protocol comprising a community string field for an appliance in the data communication, wherein, a string to be applied once, based on a shared seed between the client and the agent, is adapted to be incorporated into the community string field to be transmitted between the client and the agent for authentication, wherein the once to be applied string is determined by an algorithm providing the same value at both the client and the agent based on the shared seed.

In accordance with a third aspect of the invention there is provided a method for authentication of data communication over a communication link between a transmitting network entity and a receiving network entity in accordance with an ordinarily insecure network communication protocol, the protocol comprising a community string field for an appliance in the data communication, wherein, the method comprises the steps of:
establishing a seed at the either network entity for sharing the seed to the one network entity, which did not establish the seed,
sharing the seed with the one network entity, which did not establish the seed,
generating a string to be applied once based on the shared seed at both the transmitting network entity and the receiving network entity,
incorporating, at a transmitting network entity, the string into the community string field for transmitting a message in accordance with the ordinarily insecure network communication protocol,
receiving the message at the receiving network entity,
checking the string of the community string field of the message for correspondence with the string, which is calculated, at the receiving network entity, and
authenticating the message if there is a correspondence between the string of the community string field of the message and the generated string.

For better understanding of the present invention reference is made to the following description, taken in conjunction with the accompanying drawings, and its scope will be pointed out in the appending claims.

### BRIEF DESCRIPTION OF THE DRAWINGS

The invention will now be described, by way of example only, with reference to the accompanying drawings, in which:
Figure 1 depicts an embodiment of a networking environment in which the principles of the invention are applied,
Figure 2 depicts an example of encoded SNMP message for containing a dynamic variable identifier for an authentication of a network entity in accordance with an embodiment of the invention,
Figure 3 depicts in a form of a combined flow chart and signaling diagram a method for authentication of a network entity in an ordinarily insecure network communication protocol in accordance with an embodiment of the invention,
Figure 4 depicts in a form of a flow chart a collective method for authenticating network entities in an ordinarily insecure network communication protocol in accordance with an embodiment of the invention.

### DETAILED DESCRIPTION OF THE EMBODIMENTS

The preferred embodiments of the invention provide a method, a system and network entities for authenticating the participants. The preferred embodiments applies communal string field of the SNMP message to secure set based operation between the agent and the client. Each communal string is applied only once and new one is determined with the same secure algorithm at both ends. The used secure algorithm is based on random seed and can provide the system with required security by complex enough creation of the new communal string from the seed. The applied communal string should contain enough bits, so that anyone monitoring the traffic cannot use random/sequence strings. Preferably, at least five characters should be applied. The method, the system and the entities according to the invention are very practical because they can provide the ordinarily insecure network communication protocol such as the Simple Network Management Protocol (SNMP) with some secure and authentication and yet preserve the simple philosophy of such a communication way.

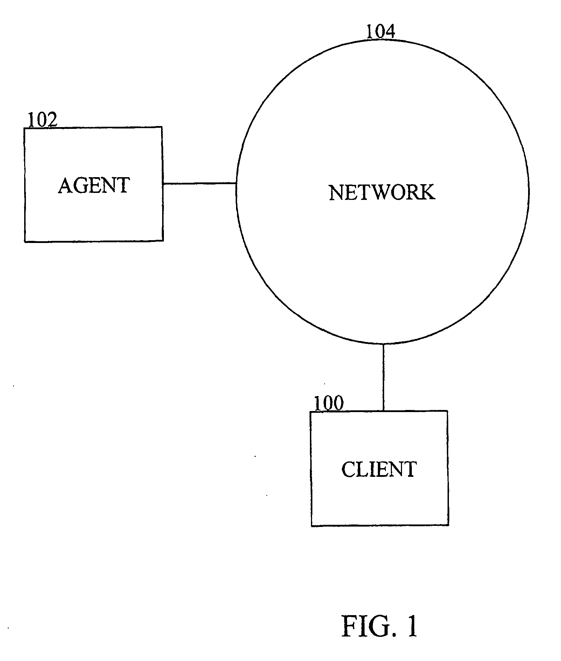

Fig. 1 has been described in the foregoing. In the following, corresponding reference signs have been applied to corresponding parts. Some embodiments of the invention apply the client (100). The client (100) is defined as a data processing device transmitting (and possibly receiving) a message over a network (104). The client (100) can be a workstation of a user or an administrator (not shown). The client (100) includes a data processor (not shown), and memory (not shown). The data processor executes various programs in the memory, and the execution may change information state in the memory. Similarly, some embodiments of the invention apply the agent (102). The agent (102) is defined as a data processing device receiving (and possibly transmitting) the message. The agent (102) can be a network file server being configured by the system administrator. The agent (102) includes also a data processor (not shown) and a memory (not shown). Some more technical details about the client and the agent can be found from the standardization specification RFC 1157.

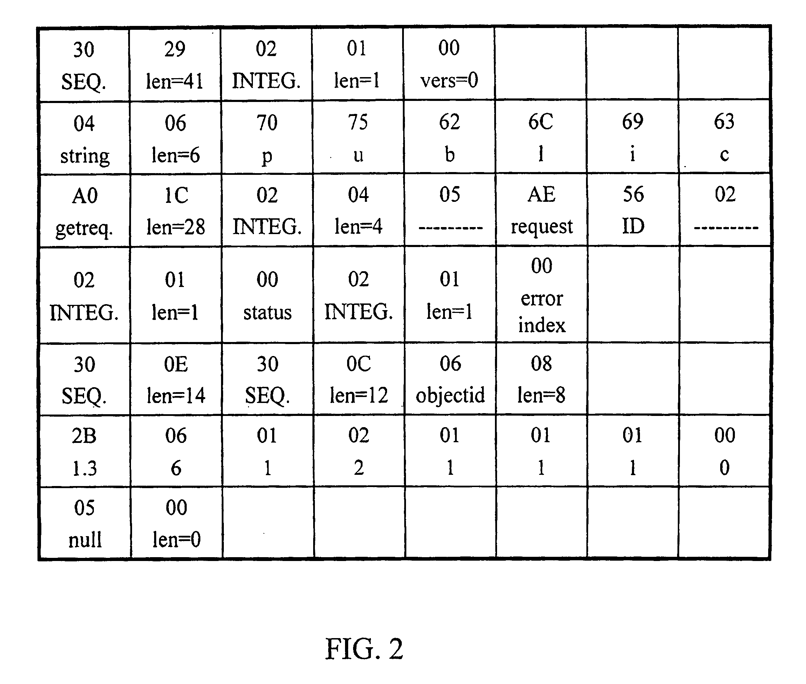

Some embodiments of the invention apply the SNMP message. The SNMP message contains three main parts: the protocol version, the SNMP community identifier also referred to as the communal string or the communal string field, and the data area. The data area is divided into protocol data units (PDUs). The SNMP message applies ASN-1 encoding. An example of encoded SNMP message can be seen in Figure 2. The communal string field is stored in a character string, which in the example, is a 6-octet string that contains the word 'public'. Some more technical details about the SNMP message can be found from the standardization specification RFC 1157.

Referring back to the example of Fig. 1, the client (100) uses the Simple Network Management Protocol (SNMP) to inspect or alter management information of the agent (102). The client (100) includes a client application program (not shown), which specifies the management information to be inspected or altered, and the agent (102) includes an agent application program (not shown) which is capable of accessing or altering management information in the memory of the agent (102). SNMP is an application-level protocol, which is invoked by the client application program or the agent application program to send or receive messages using various kinds of communication protocols. The client 100 has a SNMP transmit service (not shown) and a SNMP receive service (not shown) for transmitting and receiving, respectively, SNMP messages. The SNMP transmit service invokes a communication protocol service (not shown) to transmit SNMP messages over the network (104). In a similar fashion, the communication protocol service may receive SNMP messages from the network (104) and direct the messages to the SNMP receive service. The agent (102) likewise has a SNMP transmit service (not shown), a SNMP receive service (not shown), and a communication protocol service (not shown). The communication protocol services, for example, use the Transmission Control Protocol (TCP/IP) or the User Datagram Protocol (UDP).

Still referring to the example of Fig. 1, both entities (the client 100 and the agent 102) have a secure algorithm program (not shown) for calculation of a new communal string from the seed. The secure algorithm is based on the generated or obtained seed depending on the entity as described later in more detail. The secure algorithm program receives the seed. Based on received seed the secure algorithm program calculates a new value/string, which, thus, is also based on the seed. This new value is random and is not based on cyclical sequential series. However, the round of the calculation does have an importance in such a way that, starting from the seed, the round in question provides always the same value (the same string). This provides an advantage for the system as the secure algorithm program outputs the very same value for the same round starting from the seed. For example, 1) a character string "qwerty" stands for the seed. 2) The secure algorithm program receives the string "qwerty" and produces a new string value "!"#¤%&/()=". At this step is should be noted that the very same result "!"#¤%&/()=" would be resulted although absolutely the same program at the same entity would not perform the operation. For example, the client and the agent having similar secure algorithm program would result in the same result in the first round. 3) The secure algorithm produces a new string value "ASDFGHJKL" for the second calculation round. Of course, this would again be the result in any secure algorithm program running in any operable device for this particular round. The secure algorithm program can be based on, for example, MD5.

MD5 is an algorithm that is used to verify data integrity through the creation of a 128-bit message digest from data input (which may be a message of any length) that is claimed to be as unique to that specific data as a fingerprint is to the specific individual. MD5 is intended for use with digital signature applications, which require that large files must be compressed by a secure method before being encrypted with a secret key, under a public key cryptosystem. MD5 is currently a standard, Internet Engineering Task Force (IETF) Request for Comments (RFC) 1321. According to the standard, it is "computationally infeasible" that any two messages that have been input to the MD5 algorithm could have as the output the same message digest, or that a false message could be created through apprehension of the message digest. MD5 is the third message digest algorithm. All three (the others are MD2 and MD4) have similar structures, but MD2 was optimized for 8-bit machines, in comparison with the two later formulas, which are optimized for 32-bit machines. The MD5 algorithm is an extension of MD4, which the critical review found to be fast, but possibly not absolutely secure. In comparison, MD5 is not quite as fast as the MD4 algorithm, but offers much more assurance of data security.

Still referring to the example of Fig. 1, the agent 102 maintains also a random number generator for establishing the seed. Preferably, the random number generator is a pseudo-random number generator (PRNG). The PRNG is a program written for, and used in, probability and statistics applications when large quantities of random digits are needed. Most of these programs produce endless strings of single-digit numbers, usually in base 10, known as the decimal system. When large samples of pseudo-random numbers are taken, each of the 10 digits in the set {0,1,2,3,4,5,6,7,8,9} occurs with substantially equal frequency, even though they are not evenly distributed in the sequence. For example, the random number generator generates the seed "qwerty". Alternatively, the client 100 may maintain the random number generator, or both network entities may have the random number generator.

Still referring to the example of Fig. 1, the both network entities stores an authenticity checking program (not shown). The authenticity checking program is applied in the system for checking whether the communal string is what it is expected to be. Some operation of the authenticity checking program are described next. As any communal string has been generated from the seed, the calculated new communal string is incorporated into the SNMP message for authentication and transmitted to the other end. The other end checks the authenticity and validity of the SNMP message by checking the communal string field and comparing the received communal string field value/string to the value/string obtained from the secure algorithm program of the other end. If the values/strings indicate (or are) the same, it can be deduced that the SNMP message is authentic and derives from the appropriate authentic party. If there are any difference between the received communal string value/string and the calculated communal string value of the receiving end, the authenticity checking program outputs an error. This may show that there is a possibility of an unauthorized party.

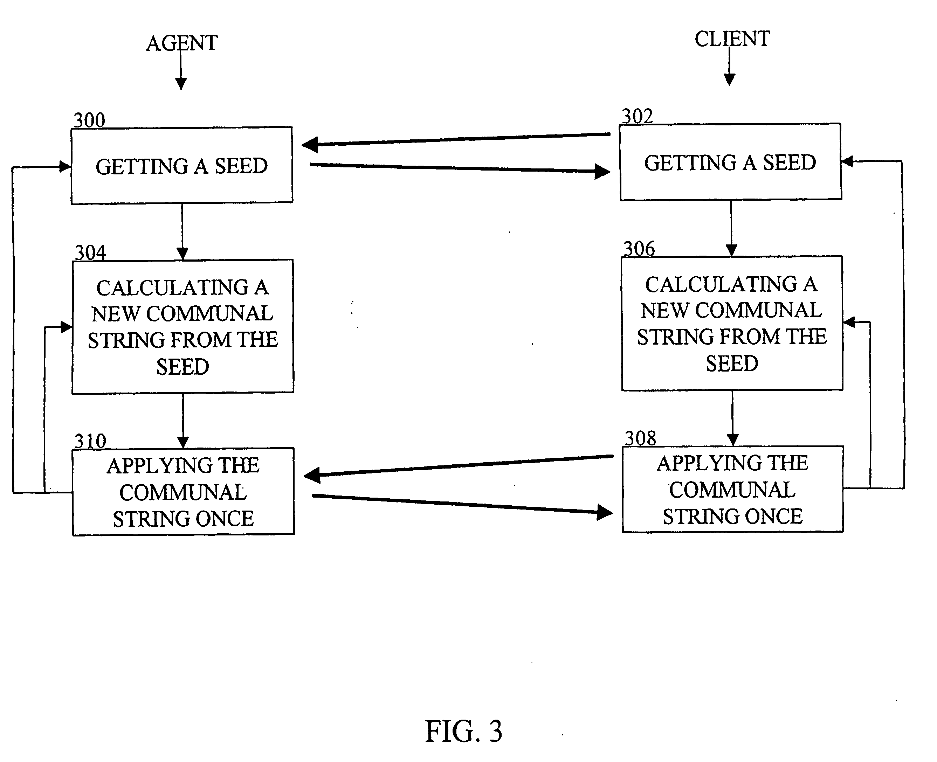

Fig. 3 has been described in the foregoing. In the following, corresponding reference signs have been applied to corresponding parts. The example of Fig. 3 comprises two substantial network entities or alternatively referred to as network nodes: the client 100 and the agent 102. The example of Fig. 3 is compatible to operate in accordance with the ordinarily insecure network protocol communication such as the SNMP. The either one of the network entity establishes the seed (steps 300 and 302). Preferably, the agent 102 establishes the seed by the random number generator program. The client 100 contacts the agent 102 by the get operation in accordance with the SNMP communication protocol. At this step, the seed may or may not be established beforehand, or established as the initiation for the SNMP communication has been received. The client 100 transmits the get operation to the vendor-specific object with any communal string. The agent 102 receives the communication and replies to the client 100 by transmitting the seed. Preferably, the seed is contained in the Protocol Data Unit (PDU) field of the SNMP message. The seed has enough significant bits to randomize the actual seed and any derivative based on the seed.

Referring to the example of Fig. 3, alternatively, the seed can be established at the client 100 but of course the seed is communicated to the agent 102 via the SNMP messaging for harmonizing the network entities for the secure algorithm process.

Still referring to the example of Fig. 3, in the steps 304 and 306 a new communal string is calculated from the seed. Both the agent 102 and the client 100 calculate by the secret algorithm program the new communal string from the seed. The calculated communal string is stored at the both entities. Thereafter, whenever there is a need to do the SET based operation, the determined communal string for authentication of the party is ready for appliance. In step 308 the client has received a need for some network operation, which can preferably presume some level of security. The client 100 attaches or incorporates the generated communal string into the communal string field. The client 100 sends SET based operation to the agent 102. The transmission comprises the SNMP based message(s) that contains the determined string in the communal string field. The agent 102 receives the SNMP message in the steps 308 and 310. The agent 102 checks the SNMP message and in particular the communal string field. If the communal string field is what it is expected to be, for example, the value of the transmitted communal string field matches with the values of the calculated communal string field value of the agent 102, the agent 102 accepts the authenticity. The agent 102 may respond by sending a positive acknowledgement message to the client 100. Alternatively, the agent 102 may attach the generated communal string field value of the agent 102 into the respond SNMP message for further authentication by the client 100. The steps 308 and 310 are applied only once for the currently applied calculated communal string field value. After the value has been applied once, the process returns to the steps 304 and 306 at the respective ends. Advantageously, the authentication string is therefore used only once, which makes the authentication string more difficult by monitoring to crack. Thus, whenever there is a need to do more SET based operation, or a single SET based operation presumes more than one authentication for the messages, or every message should, for some reason, be authenticated, the new communal string is determined at the both ends (steps 304 & 306), and the new determined string is applied once for authentication process in the actual SET operation in the steps 308 & 310. The loop of the steps 304 & 306 and the steps 308 & 310 can be performed as many times as the both ends maintain the same round for the generation and the appliance and, consequently, the identification of the value/string of the communal string field.

Still referring to the example of Fig. 3, if the agent 102 detects that the value of the communal string field, which the agent 102 has received does not match with the value it has calculated, the agent 102 can deduce that the SNMP message is not authentic. Consequently, the agent 102 can disregard the SNMP message it has received. The agent 102 returns the process back to the step 300 for establishing the seed again. The agent 102 can respond an error acknowledgement (negative acknowledgement) to the one that has sent the SNMP message. Therefore, the one that has sent the SET operation SNMP message receives information about the failure. Now if this one is the client 100 compatible (and not any imposter), it can return to the step 302 in the process for establishing the proper authenticated communication with the agent 102 again.

Still referring to the example of Fig. 3, of course, the client 100 can detect that the value of the communal string field, which the client 100 has received does not match with the value it has calculated, the client 100 can deduce that the SNMP message is not authentic.

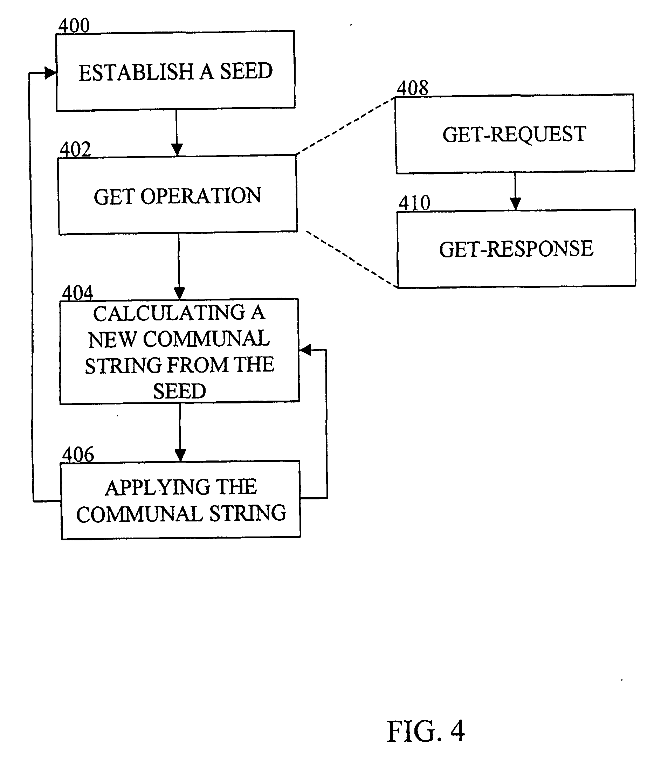

Fig. 4 has been described in the foregoing. In the following, corresponding reference signs have been applied to corresponding parts. In step 400 there is established the seed. Preferably, the seed is established by the agent 102, and the seed can be possibly determined beforehand and stored. Alternatively, the client 100 can establish the seed, or both ends establish the seed and the one that initiates the seed sharing determines the dominant and applied seed. The seed is generated by the random number generator program as described above in the example of Fig. 1. In step 402 the client 100 starts the get operation. The client 100 transmits the get-request to the agent 102 by the SNMP message (sub-step 408). The SNMP message contains now any communal string field value(s). As a response from the agent 102, the client 100 receives the SNMP message containing the seed. Preferably, the seed is contained in the PDU field of the SNMP message. Thus, the agent 102 responds to the client 100 by the get-response (sub-step 410). Preferably, the bit amount of the seed should be large enough that the calculated random process is reliable enough. In step 404 there is calculated the value for the communal string field based authentication from the seed value. Both the client 100 and the agent 102 perform the calculation based on the same seed by the secure algorithm program as described in context with the example of Fig. 1. The client 100 obtains a request for the SET based communication. The calculated value based on the seed is embedded into the communal string field of the SNMP message. The client 100 sends SET based operation by the SNMP message to the agent 102. The SNMP message contains the calculated communal string field value. The agent 100 receives the SNMP message, checks the communal string field of the SMNP message. The agent 102 check whether the value of the communal string field of the SMNP message matches with the value, which the agent 102 has calculated from the seed by the secure algorithm program. The agent sends acknowledge response if there is a match. The agent 102 also acts according to the SET operation request received from the client 100. The step 406 ensures that in the process the authentication string is only applied once. Both ends perform the step 406 only once for ensuring and increasing security by forcing the both ends to generate a new communal string from the seed for the authentication. The loop of the steps 404 and 406 can be performed as many times as the both ends maintain the same round for the generation and for the appliance and, consequently, the identification of the value/string of the communal string field.

Still referring to the example of Fig. 4, alternatively the system can have additional authentication step. After the agent 102 has received the SNMP message containing the first communal string field value for authentication, and agent 102 normally checks the correspondence between the received value and the created value. The agent 102 can now include the value, which the agent 102 has created by the secure algorithm program, into the communal string field of the acknowledgement SNMP message, and send the message to the client 100. The client 100 receives the message, and also checks the correspondence between the value, which the client created by the secure algorithm program and which was sent to the agent 102, and the value of the received acknowledgement SNMP message. If there is a match, the client 100 gets a double authorization check. The client 100 may now also have the knowledge that he is dealing with an authorized agent. This can be beneficial for some operation or functions that promote or even presume authorization at the both ends. For example, many telecommunication based financial transactions presume authority of the parties. Again, in this alternative embodiment, if the either one end detects that there is no match between the values of the communal string field, there is an indication that the authenticity of the other party may be questionable. The process returns back to the step 400.

There can be at least two options that trigger the returning. 1) Either party detects that the values do not match and returns back to the initiating step. The other party may still be in the loop for creating new communal string values based on the original seed. However, the other party can detect that there is an error even though it receives no specific message on that. As the requested SNMP message based operation(s) provides no result, the other party can deduce that an error has occurred and can return to the beginning of the process. 2) Either party send the negative acknowledgement SNMP message to the other party that the authentication will not match. The negative acknowledgement message may contain a request to initiate the seed creation process again.

Still referring to the example of Fig. 4, alternatively, the currently applied communal string field value can be changed every time SNMP message is transmitted between the network entities. For example, a first determined communal string field value is applied for the SET based operation from the client to the agent. A second communal string field value is determined at the both ends, and the second value is applied for the response from the agent to the client.

The client (and the agent respectively) can act as a transmitting network entity or a receiving network entity. Thus, the client-agent pair forms the transmitter-receiver pair (or the receiver-transmitter respectively) in the data communication in accordance with the ordinarily insecure network communication protocol such as the SNMP.

Particular implementations and embodiments of the invention have been described. It is clear to a person skilled in the art that the invention is not restricted to details of the embodiments presented above, but that it can be implemented in other embodiments using equivalent means without deviating from the characteristics of the invention. The scope of the invention is only restricted by the attached patent claims.

## Claims

1. A system for providing authentication of data communication over a communication link (104) between a client (100) and an agent (102) in accordance with an ordinarily insecure network communication protocol, the protocol comprising a community string field for an appliance in the data communication, **characterized in that**, a string to be applied once, based on a shared seed between the client and the agent, is adapted to be incorporated into the community string field to be transmitted between the client and the agent for authentication, wherein the string is determined by an algorithm providing the same value at both the client and the agent based on the shared seed.

2. A system according to claim 1, wherein a second string adapted to be applied once, based on the shared seed, is determined if either the client or the agent has applied the once to be applied string once.

3. A system according to claim 2, wherein the transmitted once to be applied string of a transmitting entity and the generated once to be applied string of a receiving network entity match for each string calculation round, and any other pair of the strings does not match, wherein the client and the agent comprise a transmitting network entity and a receiving network entity depending on an operational mode of the client and the agent in the communication link, wherein the roles can be changed.

4. A system according to claim 1, wherein the shared seed is based on a random number generator and is generated at either one of the client or the agent, and communicated to the one, which did not generate the shared seed.

5. A system according to any preceding claim, wherein the ordinarily insecure network communication protocol comprises Simple Network Management Protocol (SNMP).

6. A system according to any preceding claim, wherein the communication link (104) comprises Internet.

7. A system according to any preceding claim, wherein the algorithm generates a new string to be applied once, which string is based on the seed and on a secure random logic for being difficult to copy a pattern of a plurality of the strings.

8. A system according to claim 1, wherein the client and the agent remain synchronized in an operation loop of currently generated and once to be applied string by an acknowledgement message between the client and the agent.

9. A system according to claim 1, wherein the client or the agent sets an operation in accordance with the data communication unauthorized, if the string to be applied once, which is transmitted therebetween, does not correspond with a generated string to be applied once of a receiving network entity, wherein the client and the agent comprise a transmitting network entity and the receiving network entity depending on an operational mode of the client and the agent in the communication link, wherein the roles can be changed.

10. An apparatus (100,102) for providing authentication of data communication over a communication link (104) between a client (100,102) and an agent (100,102) in accordance with an ordinarily insecure network communication protocol, the protocol comprising a community string field for an appliance in the data communication, **characterized in that** a string to be applied once, based on a shared seed between the client and the agent, is adapted to be incorporated into the community string field to be transmitted between the client and the agent for authentication, wherein the once to be applied string is determined by an algorithm providing the same value at both the client and the agent based on the shared seed.

11. A method for authentication of data communication over a communication link (104) between a transmitting network entity (100,102) and a receiving network entity (100,102) in accordance with an ordinarily insecure network communication protocol, the protocol comprising a community string field for an appliance in the data communication, **characterized in that** the method comprises the steps of:
establishing (300,302,400) a seed at the either network entity for sharing the seed with the one network entity, which did not establish the seed,
sharing (300,302,400,408,410) the seed with the one network entity, which did not establish the seed,
generating (304,306,404) a string to be applied once based on the shared seed at both the transmitting network entity and the receiving network entity,
incorporating (308,310,406), at a transmitting network entity, the string into the community string field for transmitting a message in accordance with the ordinarily insecure network communication protocol,
receiving (308,310,406) the message at the receiving network entity,
checking (308,310,406) the string of the community string field of the message for correspondence with the string, which is calculated, at the receiving network entity, and
authenticating (308,310,406) the message if there is a correspondence between the string of the community string field of the message and the generated string.

12. A method according to claim 11, further comprising the steps of
generating a second string to be applied once based on the shared seed at both the transmitting network entity and the receiving network entity,
incorporating, at the transmitting network entity, the second string into the community string field for transmitting a second message in accordance with the ordinarily insecure network communication protocol,
receiving the second message at the receiving network entity,
checking the second string of the community string field of the second message for correspondence with the second string, which is calculated, at the receiving network entity, and
authenticating the second message if there is a correspondence between the second string of the community string field of the second message and the generated second string.

13. A method according to claim 11, wherein the transmitting network entity and the receiving network entity comprise a client and an agent depending on an operational mode of the transmitting network entity and the receiving network entity in the communication link, wherein the roles can be changed.

## Patentansprüche

1. System zum Bereitstellen einer Authentisierung von Datenkommunikation über eine Kommunikationsverbindung (104) zwischen einem Client (100) und einem Agent (102) in Übereinstimmung mit einem gewöhnlich unsicheren Netzkommunikationsprotokoll, wobei das Protokoll ein Gemeinschafts-Zeichenketten-Feld für eine Anwendung in der Datenkommunikation umfasst, **dadurch gekennzeichnet, dass** eine einmal anzuwendende Zeichenkette, die auf einem vom Client und vom Agent gemeinsam verwendeten Initialisierungswert basiert, dazu ausgelegt ist, in das zur Authentisierung zwischen dem Client und dem Agent zu übermittelnde Gemeinschafts-Zeichenketten-Feld eingegliedert zu werden, wobei die Zeichenkette durch einen Algorithmus bestimmt wird, der basierend auf dem gemeinsam verwendeten Initialisierungswert sowohl beim Client als auch beim Agent den gleichen Wert bereitstellt.

2. System nach Anspruch 1, wobei eine zweite Zeichenkette, die dazu ausgelegt ist, einmal angewendet zu werden, basierend auf dem gemeinsam verwendeten Initialisierungswert bestimmt wird, wenn entweder der Client oder der Agent die einmal anzuwendende Zeichenkette einmal angewendet hat.

3. System nach Anspruch 2, wobei die übertragene einmal anzuwendende Zeichenkette einer Sendeinstanz und die erzeugte einmal anzuwendende Zeichenkette einer empfangenden Netzinstanz für jede Zeichenketten-Berechnungsrunde einander entsprechen und jedes andere Paar der Zeichenketten einander nicht entspricht, wobei der Client und der Agent abhängig von einer Betriebsart des Clients und des Agents in der Kommunikationsverbindung eine sendende Netzinstanz und eine empfangende Netzinstanz umfassen, wobei die Rollen vertauscht sein können.

4. System nach Anspruch 1, wobei der gemeinsam verwendete Initialisierungswert auf einem Zufallszahlengenerator basiert und entweder am Client oder am Agent erzeugt wird und an denjenigen kommuniziert wird, der den gemeinsam verwendeten Initialisierungswert nicht erzeugt hat.

5. System nach einem der vorhergehenden Ansprüche, wobei das gewöhnlich unsichere Netzkommunikationsprotokoll das Simple-Network-Management-Protocol (SNMP) umfasst.

6. System nach einem der vorhergehenden Ansprüche, wobei die Kommunikationsverbindung (104) das Internet umfasst.

7. System nach einem der vorhergehenden Ansprüche, wobei der Algorithmus eine neue einmal anzuwendende Zeichenkette erzeugt, wobei die Zeichenkette auf dem Initialisierungswert und auf einer sicheren Zufallslogik beruht, damit ein Muster einer Mehrzahl der Zeichenketten schwer zu kopieren ist.

8. System nach Anspruch 1, wobei der Client und der Agent in einer Arbeitsschleife einer gerade erzeugten und einmal anzuwendenden Zeichenkette durch eine Rückmeldungs-Nachricht zwischen dem Client und dem Agent synchronisiert bleiben.

9. System nach Anspruch 1, wobei der Client oder der Agent eine Operation in Übereinstimmung mit der Datenkommunikation als nicht-autorisiert setzt, wenn die einmal anzuwendende Zeichenkette, die zwischen ihnen übermittelt wird, nicht mit einer von einer empfangenden Netzinstanz erzeugten, einmal anzuwendenden Zeichenkette übereinstimmt, wobei der Client und der Agent abhängig von einer Betriebsart des Clients und des Agents in der Kommunikationsverbindung eine sendende Netzinstanz und die empfangende Netzinstanz umfassen, wobei die Rollen vertauscht sein können.

10. Vorrichtung (100, 102) zum Bereitstellen einer Authentisierung von Datenkommunikation über eine Kommunikationsverbindung (104) zwischen einem Client (100, 102) und einem Agent (100, 102) in Übereinstimmung mit einem gewöhnlich unsicheren Netzkommunikationsprotokoll, wobei das Protokoll ein Gemeinschafts-Zeichenketten-Feld für eine Anwendung in der Datenkommunikation umfasst, **dadurch gekennzeichnet, dass** eine einmal anzuwendende Zeichenkette, die auf einem vom Client und vom Agent gemeinsam verwendeten Initialisierungswert basiert, dazu ausgelegt ist, in ein zwischen dem Client und dem Agent zu übertragendes Gemeinschafts-Zeichenketten-Feld zur Authentisierung eingegliedert zu werden, wobei die einmal anzuwendende Zeichenkette durch einen Algorithmus bestimmt wird, der basierend auf dem gemeinsam verwendeten Initialisierungswert sowohl beim Client als auch beim Agent den gleichen Wert bereitstellt.

11. Verfahren zur Authentisierung von Datenkommunikation über eine Kommunikationsverbindung (104) zwischen einer sendenden Netzinstanz (100, 102) und einer empfangenden Netzinstanz (100,102) in Übereinstimmung mit einem gewöhnlich unsicheren Netzkommunikationsprotokoll, wobei das Protokoll ein Gemeinschafts-Zeichenketten-Feld für eine Anwendung in der Datenkommunikation umfasst, **dadurch gekennzeichnet, dass** das Verfahren folgende Schritte umfasst:
Festlegen (300, 302, 400) eines Initialisierungswertes an einer von beiden Netzinstanzen zum gemeinsamen Verwenden des Initialisierungswertes mit derjenigen Netzinstanz, die den Initialisierungswert nicht festgelegt hat,
gemeinsames Verwenden (300, 302, 400, 408, 410) des Initialisierungswertes mit derjenigen Netzinstanz, die den Initialisierungswert nicht festgelegt hat,
Erzeugen einer einmal anzuwendenden Zeichenkette (304, 306, 404) basierend auf dem gemeinsam verwendeten Initialisierungswert sowohl an der sendenden Netzinstanz als auch an der empfangenden Netzinstanz,
Eingliedern (308, 310, 406) der Zeichenkette an einer sendenden Netzinstanz in das Gemeinschafts-Zeichenketten-Feld zum Übermitteln einer Nachricht in Übereinstimmung mit dem gewöhnlich unsicheren Netzkommunikationsprotokoll,
Empfangen (308, 310, 406) der Nachricht an der empfangenden Netzinstanz,
Überprüfen (308, 310, 406) der Zeichenkette des Gemeinschafts-Zeichenketten-Feldes der Nachricht auf Übereinstimmung mit der berechneten Zeichenkette an der empfangenden Netzinstanz, und
Authentisieren (308, 310, 406) der Nachricht, wenn die Zeichenkette des Gemeinschafts-Zeichenketten-Feldes der Nachricht mit der erzeugten Zeichenkette übereinstimmt.

12. Verfahren nach Anspruch 11 ferner die Schritte umfassend:
Erzeugen einer zweiten einmal anzuwendenden Zeichenkette basierend auf dem gemeinsam verwendeten Initialisierungswert sowohl an der sendenden Netzinstanz als auch an der empfangenden Netzinstanz,
Eingliedern der zweiten Zeichenkette an der sendenden Netzinstanz in das Gemeinschafts-Zeichenketten-Feld zum Übermitteln einer zweiten Nachricht in Übereinstimmung mit dem gewöhnlich unsicheren Netzkommunikationsprotokoll,
Empfangen der zweiten Nachricht an der empfangenden Netzinstanz,
Überprüfen der zweiten Zeichenkette des Gemeinschafts-Zeichenketten-Feldes der zweiten Nachricht auf Übereinstimmung mit der zweiten berechneten Zeichenkette an der empfangenden Netzinstanz, und
Authentisieren der zweiten Nachricht, wenn die zweite Zeichenkette des Gemeinschafts-Zeichenketten-Feldes der zweiten Nachricht mit der erzeugten zweiten Zeichenkette übereinstimmt.

13. Verfahren nach Anspruch 11, wobei die sendende Netzinstanz und die empfangende Netzinstanz abhängig von einer Betriebsart der sendenden Netzinstanz und der empfangenden Netzinstanz in der Kommunikationsverbindung einen Client und einen Agent umfassen, wobei die Rollen vertauscht sein können.

## Revendications

1. Un système pour fournir une authentification d'une communication de données dans une liaison de communication (104) entre un client (100) et un agent (102) conformément à un protocole de communication réseau généralement non protégé, le protocole comprenant un champ de chaîne communautaire pour une application dans la communication de données, **caractérisé en ce que**, une chaîne destinée à être appliquée une fois, basée sur une valeur d'initialisation partagée entre le client et l'agent, est adaptée pour être intégrée dans le champ de chaîne communautaire à transmettre entre le client et l'agent pour authentification, dans lequel la chaîne est déterminée par un algorithme fournissant la même valeur au client et à l'agent en fonction de la valeur d'initialisation partagée.

2. Un système selon la revendication 1, dans lequel une seconde chaîne adaptée pour être appliquée une fois, basée sur la valeur d'initialisation partagée, est déterminée si le client ou l'agent a appliqué une fois la chaîne destinée à être appliquée une fois.

3. Un système selon la revendication 2, dans lequel la chaîne destinée à être appliquée une fois transmise d'une entité de transmission et la chaîne destinée à être appliquée une fois générée d'une entité de réseau de réception correspondent pour chaque cycle de calcul de chaîne, et aucune autre paire de chaînes ne correspond, dans lequel le client et l'agent comprennent une entité de réseau de transmission et une entité de réseau de réception dépendant d'un mode opérationnel du client et de l'agent dans la liaison de communication, dans lequel les rôles peuvent être changés.

4. Un système selon la revendication 1, dans lequel la valeur d'initialisation partagée est basée sur un générateur de nombres aléatoires et est générée au niveau du client ou de l'agent, et communiquée à celui qui n'a pas généré la valeur d'initialisation partagée.

5. Un système selon l'une quelconque des revendications précédentes, dans lequel le protocole de communication réseau généralement non protégé comprend un protocole SNMP.

6. Un système selon l'une quelconque des revendications précédentes, dans lequel la liaison de communication (104) comprend Internet.

7. Un système selon l'une quelconque des revendications précédentes, dans lequel l'algorithme génère une nouvelle chaîne destinée à être appliquée une fois, laquelle chaîne est basée sur la valeur d'initialisation et sur une logique aléatoire sécurisée pour qu'il soit difficile de copier un modèle d'une pluralité de chaînes.

8. Un système selon la revendication 1, dans lequel le client et l'agent restent synchronisés dans une boucle de fonctionnement d'une chaîne destinée à être appliquée une fois et actuellement générée par un message d'accusé de réception entre le client et l'agent.

9. Un système selon la revendication 1, dans lequel le client ou l'agent définit une opération selon la communication de données non autorisée, si la chaîne destinée à être appliquée une fois, qui est transmise entre eux, ne correspond pas à une chaîne générée destinée à être appliquée une fois d'une entité de réseau de réception, dans lequel le client et l'agent comprennent une entité de réseau de transmission et l'entité de réseau de réception en fonction d'un mode opérationnel du client et de l'agent dans la liaison de communication, dans lequel les rôles peuvent être changés.

10. Un appareil (100, 102) pour fournir une authentification de la communication de données par une liaison de communication (104) entre un client (100, 102) et un agent (100, 102) conformément à un protocole de communication réseau généralement non protégé, le protocole comprenant un champ de chaîne communautaire pour une application dans la communication de données, **caractérisé en ce qu'**une chaîne destinée à être appliquée une fois, basée sur une valeur d'initialisation partagée entre le client et l'agent, est adaptée pour être intégrée dans le champ de chaîne communautaire à transmettre entre le client et l'agent pour authentification, dans lequel la chaîne destinée à être appliquée une fois est déterminée par un algorithme fournissant la même valeur au client et à l'agent en fonction de la valeur d'initialisation partagée.

11. Un procédé pour l'authentification d'une communication de données par une liaison de communication (104) entre une entité de réseau de transmission (100, 102) et une entité de réseau de réception (100, 102) en fonction d'un protocole de communication réseau généralement non protégé, le protocole comprenant un champ de chaîne communautaire pour une application dans la communication de données, **caractérisé en ce que** le procédé comprend les étapes consistant à :
- établir (300, 302, 400) une valeur d'initialisation au niveau de l'une ou l'autre entité de réseau pour partager la valeur d'initialisation avec l'entité de réseau qui n'a pas établi la valeur d'initialisation,
- partager (300, 302, 400, 408, 410) la valeur d'initialisation avec une entité de réseau, qui n'a pas établi la valeur d'initialisation,
- générer (304, 306, 404) une chaîne destinée à être appliquée une fois basée sur la valeur d'initialisation partagée au niveau de l'entité de réseau de transmission et de l'entité de réseau de réception,
- intégrer (308, 310, 406), au niveau d'une entité de réseau de transmission, la chaîne dans le champ de chaîne communautaire pour transmettre un message conformément au protocole de communication réseau généralement non protégé,
- recevoir (308, 310, 406) le message au niveau d'une entité de réseau de réception,
- vérifier (308, 310, 406) la chaîne du champ de chaîne communautaire du message pour une correspondance avec la chaîne, qui est calculée, au niveau de l'entité de réseau de réception, et
- authentifier (308, 310, 406) le message s'il existe une correspondance entre la chaîne du champ de chaîne communautaire du message et la chaîne générée.

12. Un procédé selon la revendication 11, comprenant en outre les étapes consistant à :
- générer une seconde chaîne destinée à être appliquée une fois basée sur la valeur d'initialisation partagée au niveau de l'entité de réseau de transmission et de l'entité de réseau de réception,
- intégrer, au niveau de l'entité de réseau de transmission, la seconde chaîne dans le champ de chaîne communautaire pour transmettre un second message conformément avec le protocole de communication réseau généralement non protégé,
- recevoir le second message au niveau de l'entité de réseau de réception,
- vérifier la seconde chaîne du champ de chaîne communautaire du second message pour correspondance avec la seconde chaîne, qui est calculée, au niveau de l'entité de réseau de réception, et
- authentifier le second message, s'il existe une correspondance entre la seconde chaîne du champ de chaîne communautaire du second message et la seconde chaîne générée.

13. Un procédé selon la revendication 11, dans lequel l'entité de réseau de transmission et l'entité de réseau de réception comprennent un client et un agent dépendant d'un mode opérationnel de l'entité de réseau de transmission et de l'entité de réseau de réception dans la liaison de communication, dans lequel les rôles peuvent être changés.
